# EUROPÄISCHE PATENTSCHRIFT

(11) **EP 1 958 804 B1**
(45) Veröffentlichungstag und Bekanntmachung des Hinweises auf die Patenterteilung: **03.03.2010**
(21) Anmeldenummer: 07022658.4
(22) Anmeldetag: 22.11.2007
(51) Int. Cl.: B60G 21/055

(54) **Anordnung eines Stabilisators an einer Radaufhängung für Kraftfahrzeuge**
Assembly for a stabiliser for wheel suspension for motor vehicles
Agencement d'un stabilisateur sur la suspension de roue de véhicules automobiles

(30) Priorität: 14.02.2007 DE 102007007214
(43) Veröffentlichungstag der Anmeldung: 20.08.2008
(73) Patentinhaber: AUDI AG, 85045 Ingolstadt (DE); VOLKSWAGEN AG, 38436 Wolfsburg (DE)
(72) Erfinder: Schmidt, Walter, 86643 Rennertshofen (DE); Hippe, Marko, 38536 Meinersen (DE)
(74) Vertreter: Asch, Konrad

(56) Entgegenhaltungen:
- EP-A- 1 609 634
- WO-A-03/045719
- DE-A1- 2 051 807
- DE-A1- 3 734 698
- DE-A1- 10 148 095
- DE-A1- 10 242 552
- DE-A1-102005 031 037
- DE-B- 1 455 887
- GB-A- 1 011 202
- JP-A- 8 085 328

## Beschreibung

Die Erfindung betrifft eine Anordnung eines Stabilisators an einer Radaufhängung für Kraftfahrzeuge gemäß dem Oberbegriff des Patentanspruches 1.

Aus der EP-A-1 609 634 ist gattungsgemäßer, zweiteilig ausgeführter Stabilisator bekannt, dessen Längsarme an Radaufhängungselementen angelenkt sind. Die quer verlaufenden Torsionsstäbe des Stabilisators sind mit Stellvorrichtungen derart verbunden, dass eine kumulierte Länge der Torsionsstäbe größer als der Abstand der Längsarme des Stabilisators ist. Gleiches trifft auch auf den aus der DE 20 51 807 A1 bekannten Stabilisator zu.

Aus der WO 03/045719 A ist ebenfalls ein Stabilisator bekannt, der eine Stellvorrichtung mit einem Elektromotor aufweist, der über einen Winkeltrieb auf das zum jeweiligen Torsionsstab koaxiale Getriebe wirkt. Aus der GB-A-1 011 202 ist eine Radaufhängung mit Torsionsstäben bekannt, von denen jeder Torsionsstab über eine Lagerstelle hinaus verlängert ist und trieblich mit koaxial angeordneten, rückführenden Hohlwellen verbunden sind, die wiederum die Längsarme tragen.

Weitere Anordnungen von zweigeteilten Stabilisatoren mit einer Stellvorrichtung zum Beeinflussen der Federraten und der Fahreigenschaften von Kraftfahrzeugen zeigen beispielsweise die DE 101 26 928 A1, DE 10 2004 002 550 A1, oder die DE 102 42 552 B4. Dabei kann durch gegensinniges Verstellen der geteilten Torsionsstäbe des insgesamt U-förmigen Stabilisators das Wankverhalten bzw. die Kurvenneigung des Kraftfahrzeuges verringert oder durch gleichsinniges Verstellen der Nickneigung z. B. beim Bremsen entgegengewirkt werden.

Aufgabe der Erfindung ist es, eine Anordnung der gattungsgemäßen Art vorzuschlagen, die hinsichtlich der steuerungstechnischen Freiheitsgrade und in der Beeinflussung der Federraten und der Fahreigenschaften des Kraftfahrzeuges verbessert ist.

Diese Aufgabe wird erfindungsgemäß mit den Merkmalen des Patentanspruches 1 gelöst. Besonders vorteilhafte Weiterbildungen der Erfindung beschreiben die weiteren Patentansprüche.

Erfindungsgemäß wird vorgeschlagen, dass auf einen jeden Torsionsstab des geteilten Stabilisators eine separate Stellvorrichtung wirkt und dass die kumulierte Länge b₁, b₂ der Torsionsstäbe größer als der Abstand b₃ der Längsarme des Stabilisators zueinander ist. Zunächst ermöglicht die Anordnung zweier separater Stellvorrichtungen die Ansteuerung einer jeden Stabilisatorhälfte für sich, woraus größere Freiheitsgrade in der Steuerung der Fahreigenschaften des Kraftfahrzeuges resultieren. Ferner ist durch die vorgeschlagene Auslegung der beiden Torsionsstäbe eine größere, wirksame Länge realisierbar, mit den damit verbundenen besseren Federeigenschaften und einer Verringerung der Torsionsbelastung der Torsionsstäbe bzw. des Stabilisators im Fahrbetrieb.

Bevorzugt ist eine jede Stellvorrichtung durch ein mit einem Torsionsstab trieblich verbundenes Untersetzungsgetriebe und einen Elektromotor gebildet, obwohl auch hydraulische oder pneumatische Stellvorrichtungen anwendbar sind.

In einer baulich günstigen Anordnung kann dabei der Elektromotor mittels eines Winkeltriebes auf das zum jeweiligen Torsionsstab koaxiale Untersetzungsgetriebe wirken. Dies ermöglicht neben einer zusätzlichen, getriebetechnischen Untersetzungsmöglichkeit eine größere konstruktive Anpassungsfähigkeit der Stellvorrichtungen an bauliche Gegebenheiten im Kraftfahrzeug.

Bei einer Radaufhängung für Kraftfahrzeuge mit einem Hilfsrahmen zur Anlenkung von Radführungselementen können dann die Stellvorrichtungen innerhalb von Längsträgern des Hilfsrahmens positioniert und am Hilfsrahmen befestigt sein. Daraus resultiert eine robuste Anbindung der Stellvorrichtungen an dem Hilfsrahmen, verbunden mit einer in der Fertigung vorteilhaften Schaffung einer Montageeinheit der gesamten Radaufhängung mit Radführungselementen und Stabilisator.

In fertigungstechnisch günstiger Weise können die Torsionsstäbe mit den Längsarmen derart symmetrisch hergestellt sein, dass sie im Umschlag montiert als Gleichteile links- oder rechtsseitig verwendbar sind.

In vorteilhafter Weiterbildung der Erfindung wird vorgeschlagen, dass die Torsionsstäbe im Bereich des Überganges zu den Längsarmen drehbar am Aufbau des Kraftfahrzeuges gelagert sind, dass die quer verlaufenden Torsionsstäbe über diese Lagerstellen hinaus verlängert und trieblich mit koaxial angeordneten, rückführenden Hohlwellen verbunden sind, die dann die Längsarme tragen. Dies führt ebenfalls oder zusätzlich zu einer gezielten Verlängerung (b₁, b₂) der beiden Torsionsstäbe des Stabilisators unter Ausnutzung des im Vorbaubereich des Kraftfahrzeuges zur Verfügung stehenden Bauraumes.

Eine zuverlässige und robuste Lagerung der Torsionsstäbe bzw. des Stabilisators wird zudem erzielt, indem die Torsionsstäbe frei durch die Lagerstellen hindurchgeführt sind und die rückführenden Hohlwellen unmittelbar in den Lagerstellen drehbar gelagert sind.

Erfindungsgemäß verläuft ein jeder Torsionsstab etwa bis zur senkrechten Fahrzeug-Längsmittelebene und ist dieser durch einen inneren Vollstab und einen radial äußeren Hohlstab gebildet, die an ihren den Längsarmen gegenüberliegenden Enden trieblich miteinander verbunden sind, wobei eine jede Stellvorrichtung koaxial zu den Torsionsstäben im Bereich der Längsarme angeordnet ist und die Hohlstäbe antreibt, und wobei die Längsarme mit den Vollstäben mittel- oder unmittelbar verbunden sind. Dies ermöglicht ebenfalls in baulich und räumlich vorteilhafter Weise eine Verlängerung der Torsionsstäbe.

Des weiteren können die Stellvorrichtungen jeweils durch einen Hohlwellen-Elektromotor und ein koaxial anschließendes Untersetzungsgetriebe gebildet sein und die jeweiligen Vollstäbe durch die Stellvorrichtung hindurchgeführt und mit den Längsarmen mittel- oder unmittelbar verbunden sein. Daraus resultiert eine baulich gedrängte Konstruktion bei einer gleichmäßigen, robusten Kraftverteilung im Stabilisatorbereich.

Baulich und fertigungstechnisch vorteilhaft können die im Bereich der Längsarme vorgesehenen Lagerstellen für die Torsionsstäbe in das aufbaufeste Gehäuse der Stellvorrichtung integriert sein.

Ferner können in weiterer vorteilhafter Ausnutzung des gegebenen Bauraumes im Stabilisator- bzw. Vorbaubereiches des Kraftfahrzeuges die durch die Stellvorrichtungen hindurchgeführten Vollstäbe über die Lagerstellen hinaus verlängert und trieblich mit koaxial angeordneten, rückführenden Hohlwellen verbunden sind, die dann die Längsarme tragen und in den Lagerstellen unmittelbar drehbar geführt sind.

Schließlich können die Untersetzungsgetriebe der Stellvorrichtungen durch an sich bekannte Harmonic Drive Getriebe gebildet sein, die selbsthemmend wirken und somit unerwünschte Reaktionskräfte und -momente vom Stabilisator auf den jeweiligen Elektromotor der Stellvorrichtungen fernhalten.

Nachfolgend ist ein nicht von der Erfindung umfasstes Vergleichsbeispiel sowie ein Ausführungsbeispiel der Erfindung anhand der Figuren beschrieben.

Es zeigen:
- Fig. 1: eine Draufsicht auf eine hintere Radaufhängung für Kraftfahrzeuge, mit einem Hilfsrahmen, radführenden Lenkern, einem zweiteiligen Stabilisator und zwei auf die quer verlaufenden Torsionsstäbe des Stabilisators wirkende, elektromechanische Stellvorrichtungen gemäß dem Vergleichsbeispiel;
- Fig. 2: eine Ansicht X der Fig. 1 auf den Stabilisator und die Stellvorrichtungen;
- Fig. 3: einen Längsschnitt gemäß Linie III - III der Fig. 1 durch eine der Stabilisatorlagerungen mit verlängertem Torsionsstab und einer rückführenden Hohlwelle;
- Fig. 4: eine Prinzipansicht einer der Stellvorrichtungen nach Fig. 1 mit einem Winkeltrieb zwischen Elektromotor und Untersetzungsgetriebe;
- Fig. 5: eine Heckansicht einer erfindungsgemäßen hinteren Radaufhängung mit einem zweigeteilten Stabilisator und zwei elektromechanischen Stellvorrichtungen, wobei die Torsionsstäbe des Stabilisators baulich in einen Vollstab und einen Hohlstab aufgeteilt sind; und
- Fig. 6: einen Mittel-Längsschnitt durch einen Torsionsstab der Stabilisatoranordnung gemäß Fig. 5 mit einer koaxial ausgerichteten Stellvorrichtung.

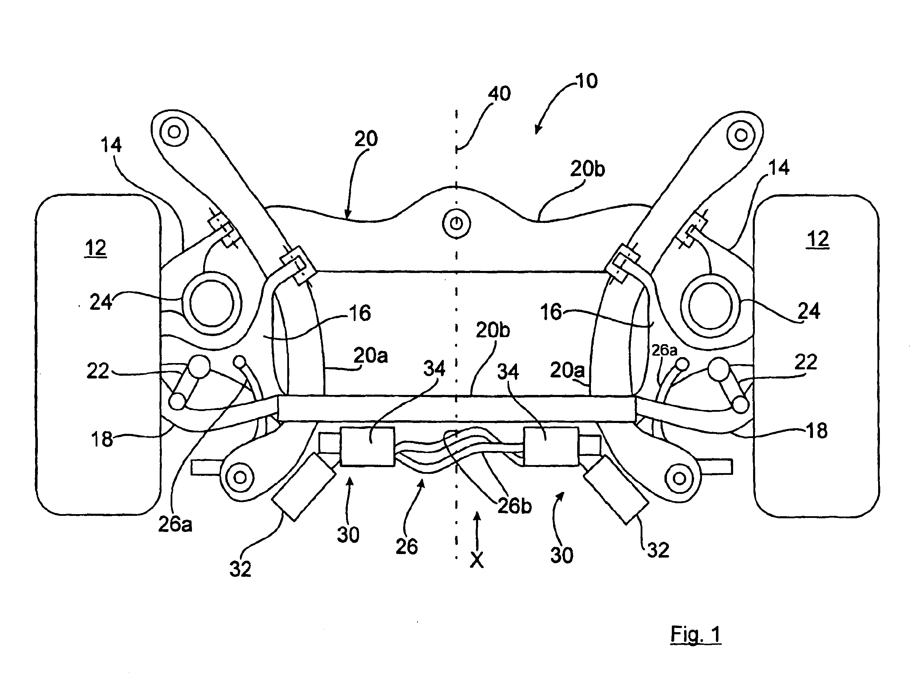

Die **Fig. 1** zeigt grob schematisch ein nicht von der Erfindung umfasstes Vergleichsbeispiel, bei dem in einer hinteren Radaufhängung 10 für die hinteren Räder 12 eines Kraftfahrzeuges die nicht näher dargestellten, radführenden Lenker 14, 16, 18 radseitig an einem Radträger (nicht ersichtlich) und aufbauseitig an einem Hilfsrahmen 20 schwenkbar angelenkt sind. Der Hilfsrahmen weist wie ersichtlich zwei Längsträger 20a und zwei Querträger 20b auf und ist in nicht dargestellter Weise am Aufbau des Kraftfahrzeuges über dämpfende Lager befestigt.

Ferner sind je ein Stoßdämpfer 22 und eine Tragfeder 24 zwischen den Lenkern 14, 18 und dem Aufbau des Kraftfahrzeuges in bekannter Weise angeordnet. Die Radaufhängung 10 kann in modifizierter Form auch als Radaufhängung für die vorderen, gelenkten Räder eines Kraftfahrzeuges ausgelegt sein.

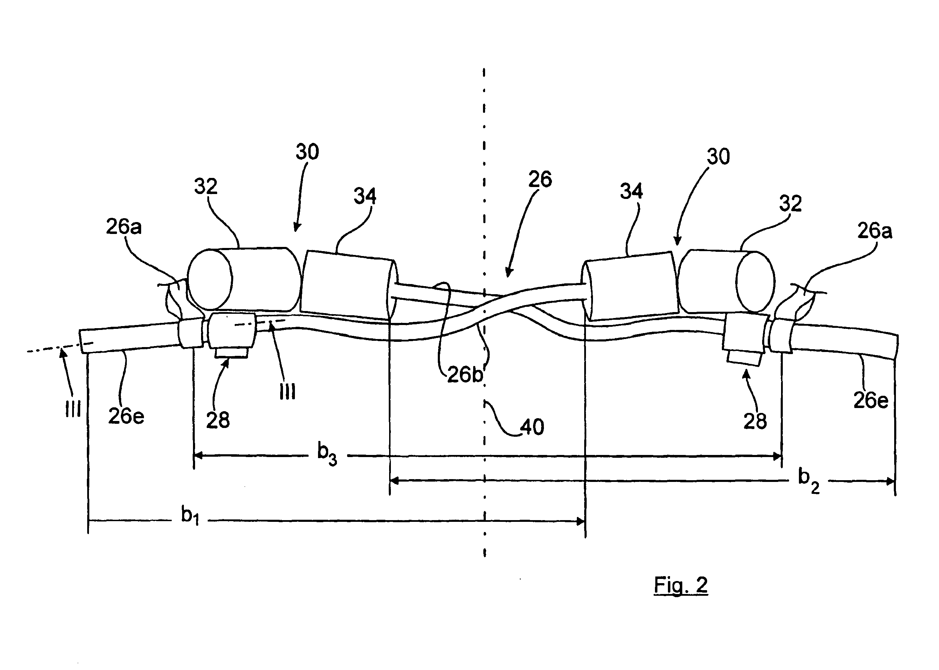

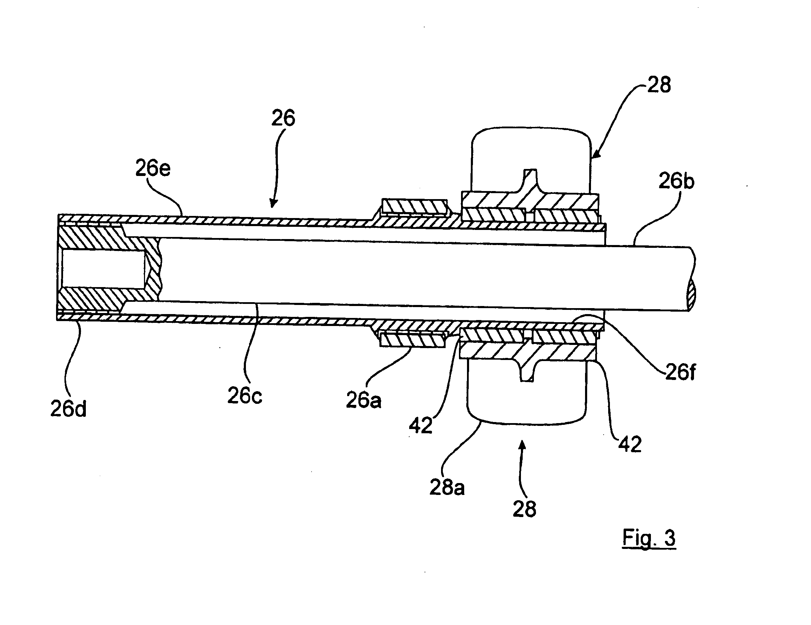

Des weiteren ist an der Radaufhängung 10 ein im wesentlichen U-förmiger Stabilisator 26 (vgl. auch **Fig. 2** **und** **3**) über aufbauseitige Lagerstellen 28 drehbar gelagert, dessen im Wesentlichen in Fahrzeuglängsrichtung verlaufende Längsarme 26a an dem unteren Lenker 16 der Radaufhängung 10 angelenkt sind.

Der zweigeteilt ausgeführte Stabilisator 26 ist hinsichtlich seiner Wirkung auf die Lenker 16 mittels zweier elektromechanischer Stellvorrichtungen 30 verstellbar, die sich aus je einem Elektromotor 32 und einem selbsthemmenden Untersetzungsgetriebe 34 zusammensetzen.

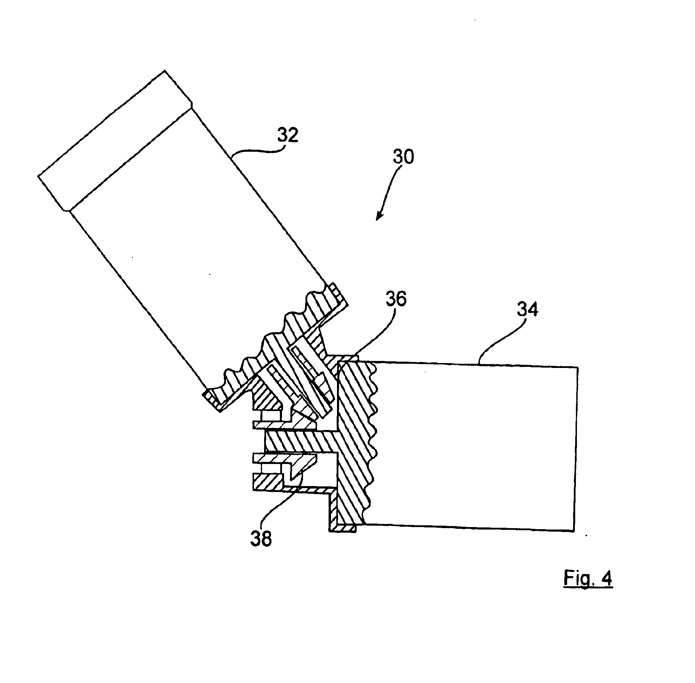

Das Untersetzungsgetriebe 34 ist dabei jeweils koaxial zu den im wesentlichen quer verlaufenden Torsionsstäben 26b des Stabilisators 26 ausgerichtet, während der Elektromotor 32 mittels eines dazwischen geschalteten Winkeltriebes (**Fig. 4**) mit Kegelzahnrädern 36, 38 in einem definierten Winkel zum Untersetzungsgetriebe 34 ausgerichtet und deshalb wie ersichtlich baulich an den Verlauf des Längsträgers 20a des Hilfsrahmens 20 angepasst ist. Die Stellvorrichtungen 30 sind zudem am Hilfsrahmen 20 mittels nicht ersichtlicher Schraubverbindungen befestigt. Ferner ist durch die getriebetechnische Auslegung der Kegelzahnräder 36, 38 eine zusätzliche Untersetzungsstufe zur Verringerung der über den Elektromotor 32 aufzubringenden Stellmomente geschaffen.

Der zweigeteilte Stabilisator 26 setzt sich wie insbesondere aus **Fig. 2** ersichtlich ist wie folgt zusammen:

Ein jeder im wesentlichen quer verlaufender Torsionsstab 26b erstreckt sich ausgehend von den Längsarmen 26a über die senkrechte Fahrzeug-Mittellängsebene (strichpunktierte Linie 40) hinaus bis zum gegenüberliegenden Untersetzungsgetriebe 34, mit dem er trieblich z.B. mittels einer Keilverzahnung (nicht dargestellt) verdrehfest verbunden ist.

In dem sich überdeckenden Bereich der Torsionsstäbe 26b sind diese wie ersichtlich verschränkt ausgeführt, um einen Freiraum zwischen den Torsionsstäben 26b sicherzustellen. Die Drehachse der Torsionsstäbe 26b, definiert durch die koaxiale Ausrichtung des Untersetzungsgetriebes 34 und der Lagerstellen 28, verläuft jedoch sich überkreuzend und leicht nach oben gepfeilt. Die verschränkten Bereiche der Torsionsstäbe 26b sind dabei derart symmetrisch ausgeführt, dass die Torsionsstäbe 26b als Gleichteile links- oder rechtsseitig der Radaufhängung 10 verbaubar sind.

Ein jeder Torsionsstab 26b (vgl. **Fig. 3**) ist mit einem Abschnitt 26c frei durch die Lagerstelle 28 hindurch und über die Anbindungsstelle des Längsarmes 26a hinaus um ein definiertes Maß verlängert und an seinem Ende über eine Keilverzahnung 26d drehfest mit einer Hohlwelle 26e verbunden, die wie ersichtlich den Längsarm 26a trägt. Das auf den Längsarm 26a ausgeübte Torsionsmoment des Torsionsstabes 26b, 26c wird somit über die Keilverbindung 26d und die Hohlwelle 26e wieder rückgeführt.

Die Hohlwelle 26e ist mittels eines angeformten Lagerhalses 26f und über zwei Nadellager 42 in der durch Lagerschalen 28a gebildeten, aufbaufesten Lagerstelle 28 drehbar gelagert und bildet somit die Führung sowohl der Hohlwelle 26e als auch des Torsionsstabes 26b, 26c im Übergangsbereich zum auf der Hohlwelle 26e befestigten Längsarm 26a.

Mit Bezug zur **Fig. 2** ist dargestellt, dass die Länge b₁, b₂ der Torsionsstäbe 26 kumuliert größer ist als die Länge b₃ zwischen den Übergangsbereichen jeweils vom Torsionsstab 26 zu den Längsarmen 26a. Daraus resultiert u. a., dass die in den Torsionsstäben 26b, 26c auftretenden Torsionsspannungen vermindert sind oder dass im Vergleich zu mittig geteilten und nicht verlängerten Torsionsstäben von Stabilisatoren höhere Stellmomente auf die Längsarme 26a übertragbar sind.

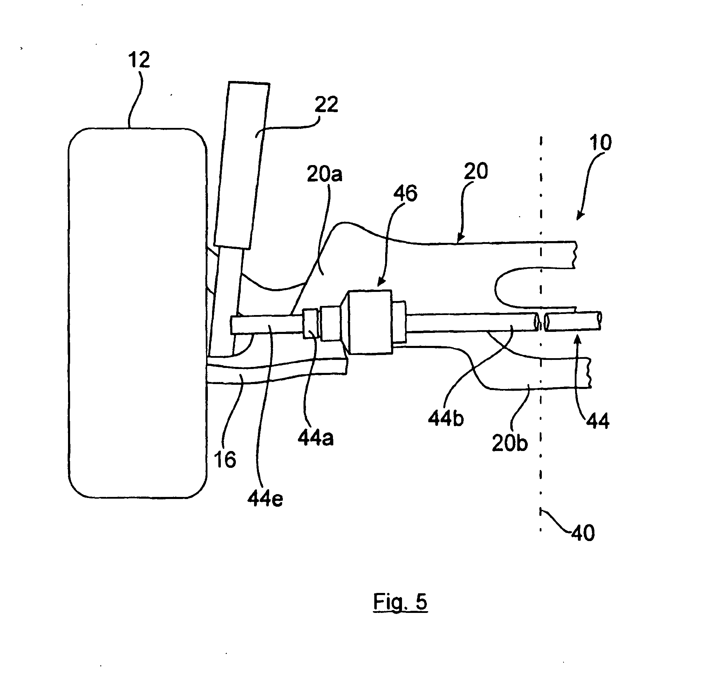

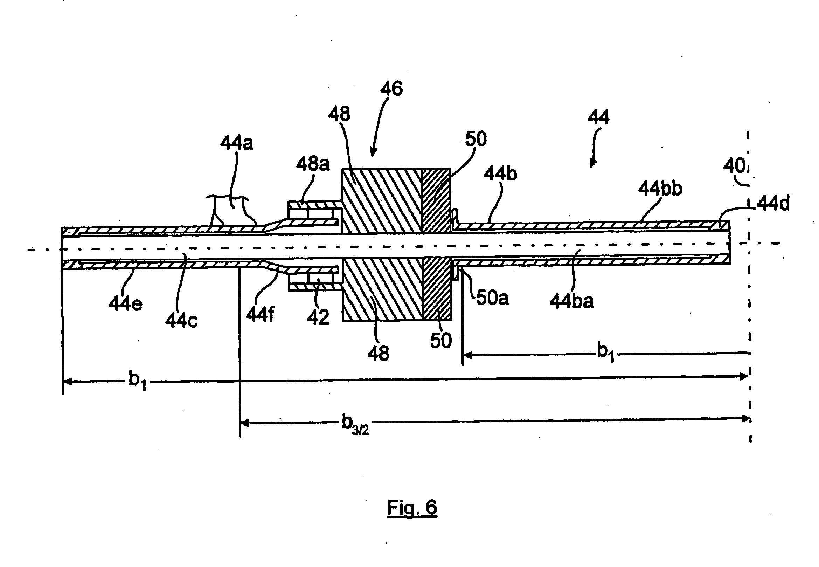

Die **Fig. 5** **und** **6** zeigen eine erfindungsgemäße Anordnung eines im Wesentlichen U-förmigen Stabilisators 44, der wie anhand der **Fig. 1** an der Radaufhängung 10 dargestellt über Längsarme 44a an den Lenkern 16 angelenkt ist. Die Anordnung ist nur soweit beschrieben, als sie sich wesentlich von der Ausführung gemäß den **Fig. 1 bis 4** unterscheidet. Gleiche Teile sind mit gleichen Bezugszeichen versehen. Die in der **Fig. 5** gezeigte Anordnung ist dabei grob vereinfacht bis geringfügig über die Längsmittelebene 40 hinaus dargestellt.

Die quer verlaufenden Torsionsstäbe 44b des etwa in der senkrechten Fahrzeug-Längsmittelebene 40 geteilten Stabilisators 44 werden über Stellvorrichtungen 46 verstellt, die sich jeweils aus einem Elektromotor 48 und einem Untersetzungsgetriebe 50 zusammensetzen und die wiederum an dem Hilfsrahmen 20 im Bereich der Längsträger 20a befestigt sind.

Ein jeder Torsionsstab 44b des Stabilisators 44 ist im Detail entsprechend **Fig. 6** (nicht dargestellte Anordnung spiegelbildlich) ausgeführt:

So ist der Torsionsarm 44b aus einem inneren Vollstab 44ba und einem radial äußeren, rohrförmigen Hohlstab 44bb ausgeführt. Die beiden Stäbe 44ba, 44bb sind aus Federstahl und dementsprechend tordierbar hergestellt. Der Hohlstab 44bb kann gegebenenfalls ein offenes Querschnittsprofil ausweisen.

Der Hohlstab 44bb ist trieblich z. B. mittels einer Flanschverbindung 50a mit dem Ausgang des Untersetzungsgetriebes 50 verbunden und verläuft von diesem bis etwa zur Fahrzeugmitte 40. Dort ist der Hohlstab 44bb über eine Keilverzahnung 44d mit dem Vollstab 44ba drehfest verbunden.

Der Vollstab 44ba verläuft nunmehr gegensinnig der Fahrzeugaußenseite zu durch den Hohlstab 44bb, durch das koaxial ausgerichtete Untersetzungsgetriebe 50 - ein sogenanntes selbsthemmendes Harmonic-Drive-Getriebe - und durch den einen Hohlwellen-Rotor (im Detail nicht dargestellt) aufweisenden Elektromotor 48.

Der Vollstab 44ba verläuft ferner weiterführend mit einem Abschnitt 44c frei über die Anbindungsstelle des Längsarmes 44a hinaus und endet mit einer weiteren Keilverzahnung 44d, über die er wiederum vergleichbar mit der vorbeschriebenen Fig. 3 mit einer rückführenden Hohlwelle 44e trieblich verbunden ist.

Die Hohlwelle 44e trägt wie ersichtlich den Längsarm 44a und ist benachbart dazu mit einem angeformten Lagerhals 44f und über ein Nadellager 42 unmittelbar in einem Gehäuseabschnitt 48a des Elektromotors 48 drehbar gelagert.

Wie aus den **Fig. 5** **und** **6** ersichtlich ist, sind der Stabilisator 44 bzw. dessen Torsionsarme 44b, 44e und die Stellvorrichtungen 46 koaxial und in geradliniger Ausrichtung ausgeführt. Die Länge b₁ des in **Fig. 6** dargestellten Torsionsstabes setzt sich aus den Abschnitten 44ba, 44bb und zusammen und ist wie ohne weiteres ersichtlich größer als die halbe Länge b₃. Gleiches gilt für die rechtsseitige Ausführung des Stabilisators 44, die sich spiegelbildlich gleich vorzustellen ist.

Die Erfindung ist nicht auf das dargestellte Ausführungsbeispiel beschränkt.

So kann der Stabilisator 44 auch ohne die Hohlwellen 44e und die verlängerten Abschnitte 44c der Torsionsstäbe 44b ausgeführt sein, z. B. aus Freiganggründen bei einer Radaufhängung mit gelenkten Rädern 12. Die Hohlwellen 44e können gegebenenfalls ebenfalls als tordierbare Hohlstäbe ausgeführt sein.

Die separate Anordnung der Stellvorrichtungen 30, 46 ermöglicht in vorteilhafter Weise eine getrennte Beaufschlagung des Stabilisators 44 bzw. seiner Torsionsstäbe 44b in gleichsinniger oder gegensinniger Antriebsrichtung mit den damit verbundenen steuerungstechnischen Freiheitsgraden.

## Patentansprüche

1. Anordnung eines Stabilisators (44) an einer Radaufhängung für Kraftfahrzeuge, mit einem U-förmigen, zweiteilig ausgeführten Stabilisator (44), dessen Längsarme (44a) an Radaufhängungselementen angelenkt sind und dessen quer verlaufende Torsionsstäbe (44b) getrennt ausgeführt und mittels einer Stellvorrichtung (46) gleich- oder gegensinnig zueinander verdrehbar sind, wobei auf einen jeden Torsionsstab (44b) eine separate Stellvorrichtung (46) wirkt und die kumulierte Länge (b₁, b₂) der Torsionsstäbe (44b) größer als der Abstand (b₃) der Längsarme (44a) des Stabilisators (44) zueinander ist, **dadurch gekennzeichnet, dass** ein jeder Torsionsstab (44b) etwa bis zur senkrechten Fahrzeug-Längsmittelebene (40) verläuft und durch einen inneren Vollstab (44ba) und einen radial äußeren Hohlstab (44bb) gebildet ist, die an ihren den Längsarmen (44a) gegenüberliegenden Enden trieblich miteinander verbunden sind, wobei eine jede Stellvorrichtung (46) koaxial zu den Torsionsstäben (44b, 44c) im Bereich der Längsarme (44a) angeordnet ist und die Hohlstäbe (44bb) antreibt, und wobei die Längsarme (44a) mit den Vollstäben (44ba, 44c) mittel- oder unmittelbar verbunden sind.

2. Anordnung nach Anspruch 1, **dadurch gekennzeichnet, dass** eine jede Stellvorrichtung (46) durch ein mit einem Torsionsstab (44b) trieblich verbundenes Untersetzungsgetriebe (50) und einen Elektromotor (48) gebildet ist.

3. Anordnung nach den Ansprüchen 1 oder 2, **dadurch gekennzeichnet, dass** bei einer Radaufhängung (10) für Kraftfahrzeuge mit einem Hilfsrahmen (20) zur Anlenkung von Radführungselementen (14, 16, 18) die Stellvorrichtungen (46) innerhalb von Längsträgern (20a) des Hilfsrahmens (20) positioniert sind.

4. Anordnung nach den Ansprüchen 1, 2 oder 3, **dadurch gekennzeichnet, dass** die Torsionsstäbe (44b) mit den Längsarmen (44a) derart symmetrisch hergestellt sind, dass sie im Umschlag als Gleichteile links- oder rechtsseitig verwendbar sind.

5. Anordnung nach einem der vorhergehenden Ansprüche, **dadurch gekennzeichnet, dass** die Torsionsstäbe (44b, 44c) im Bereich des Überganges zu den Längsarmen (44a) drehbar am Aufbau des Kraftfahrzeuges gelagert sind, dass die quer verlaufenden Torsionsstäbe (44b, 44c) über diese Lagerstellen (48a) hinaus verlängert sind und trieblich mit koaxial angeordneten, rückführenden Hohlwellen (44e) verbunden sind, die wiederum die Längsarme (44a) tragen.

6. Anordnung nach Anspruch 5, **dadurch gekennzeichnet, dass** die Torsionsstäbe (44b, 44c) frei durch die Lagerstellen (48a) hindurchgeführt sind und dass die rückführenden Hohlwellen (44e) unmittelbar in den Lagerstellen (48a) drehbar gelagert sind.

7. Anordnung nach einem der vorhergehenden Ansprüche, **dadurch gekennzeichnet, dass** die Stellvorrichtungen (46) jeweils durch einen Hohlwellen-Elektromotor (48) und ein koaxial anschließendes Untersetzungsgetriebe (50) gebildet sind und dass die jeweiligen Vollstäbe (44ba, 44c) durch die Stellvorrichtungen (46) hindurchgeführt und mit den Längsarmen (44a) mittel- oder unmittelbar verbunden sind.

8. Anordnung nach einem der vorhergehenden Ansprüche, **dadurch gekennzeichnet, dass** die im Bereich der Längsarme (44a) vorgesehenen Lagerstellen für die Torsionsstäbe (44c, 44e) in das aufbaufeste Gehäuse (48a) der Stellvorrichtung (46) integriert sind.

9. Anordnung nach einem der vorhergehenden Ansprüche, **dadurch gekennzeichnet, dass** die durch die Stellvorrichtungen (46) hindurchgeführten Vollstäbe (44ba, 44c) über die Lagerstellen (48a) hinaus verlängert und trieblich mit koaxial angeordneten, rückführenden Hohlwellen (44e) verbunden sind, die wiederum die Längsarme (44a) tragen und in den Lagerstellen (48a) unmittelbar drehbar geführt sind.

10. Anordnung nach einem der vorhergehenden Ansprüche, **dadurch gekennzeichnet, dass** die Untersetzungsgetriebe (50) der Stellvorrichtungen (46) durch Harmonic Drive Getriebe gebildet sind.

## Claims

1. Stabilizer assembly (44) on a wheel suspension system for motor vehicles, having a U-shaped stabilizer (44) which is embodied in two parts and whose longitudinal arms (44a) are coupled to wheel suspension elements and whose transversely extending torsion rods (44b) are embodied separately and can be rotated in the same direction or in opposite directions with respect to one another by means of an actuating device (46), wherein a separate actuating device (46) acts on each torsion rod (44b), and the cumulated length (b₁, b₂) of the torsion rods (44b) is greater than the distance (b₃) between the longitudinal arms (44a) of the stabilizer (44), **characterized in that** each torsion rod (44b) extends approximately as far as the perpendicular longitudinal centre plane (40) of the vehicle and is formed by an internal solid rod (44ba) and a radially outer hollow rod (44bb), which rods (44ba, 44bb) have a drive connection to one another at their ends opposite the longitudinal arms (44a), wherein each actuating device (46) is arranged coaxially with respect to the torsion rods (44b, 44c) in the vicinity of the longitudinal arms (44a) and drives the hollow rods (44bb), and wherein the longitudinal arms (44a) are indirectly or directly connected to the solid rods (44ba, 44c).

2. Assembly according to Claim 1, **characterized in that** each actuating device (46) has a reduction gearing unit (50), which has a drive connection to a torsion rod (44b), and an electric motor (48).

3. Assembly according to Claim 1 or 2, **characterized in that**, in a wheel suspension system (10) for motor vehicles having an auxiliary frame (20) for coupling wheel-guiding elements (14, 16, 18), the actuating devices (46) are positioned within longitudinal members (20a) of the auxiliary frame (20).

4. Assembly according to Claims 1, 2 or 3,
**characterized in that** the torsion rods (44b) are manufactured symmetrically with the longitudinal arms (44a) in such a way that when turned over they can be used as identical parts on the left-hand side or righthand side.

5. Assembly according to one of the preceding claims, **characterized in that** the torsion rods (44b, 44c) are rotatably mounted on the motor vehicle body in the region of the junction with the longitudinal arms (44a), **in that** the transversely extending torsion rods (44b, 44c) are made to extend beyond these bearing points (48a) and have a drive connection to coaxially arranged hollow shafts (44e) which lead back and in turn support the longitudinal arms (44a).

6. Assembly according to Claim 5, **characterized in that** the torsion rods (44b, 44c) are guided freely through the bearing points (48a), and **in that** the hollow shafts (44e) which lead back are rotatably mounted directly in the bearing points (48a).

7. Assembly according to one of the preceding claims, **characterized in that** the actuating devices (46) are each formed by a hollow-shaft electric motor (48) and a coaxially adjoining reduction gearing unit (50), and **in that** the respective solid rods (44ba, 44c) are guided through the actuating devices (46) and are indirectly or directly connected to the longitudinal arms (44a).

8. Assembly according to one of the preceding claims, **characterized in that** the bearing points, provided in the vicinity of the longitudinal arms (44a), for the torsion rods (44c, 44e) are integrated into the housing (48a), fixed to the vehicle body, of the actuating device (46).

9. Assembly according to one of the preceding claims, **characterized in that** the solid rods (44ba, 44c) which are guided though the actuating devices (46) are made to extend beyond the bearing points (48a) and have a drive connection to coaxially arranged hollow shafts (44e) which lead back, which in turn support the longitudinal arms (44a) and which are directly rotatably guided in the bearing points (48a).

10. Assembly according to one of the preceding claims, **characterized in that** the reduction gearing units (50) of the actuating devices (46) are formed by harmonic drive mechanisms.

## Revendications

1. Agencement d'un stabilisateur (44) sur une suspension de roue pour véhicules automobiles, comprenant un stabilisateur (44) réalisé en deux parties, en forme de U, dont les bras longitudinaux (44a) sont articulés à des éléments de suspension de roue et dont les barres de torsion (44b) s'étendant transversalement sont réalisées séparément et peuvent tourner l'une par rapport à l'autre au moyen d'un dispositif de commande (46), dans le même sens ou en sens inverse, un dispositif de commande séparé (46) agissant sur chaque barre de torsion (44b) et la longueur cumulée (b₁, b₂) des barres de torsion (44b) étant supérieure à la distance (b₃) des bras longitudinaux (44a) du stabilisateur (44) l'un de l'autre, **caractérisé en ce que** l'une de chaque barre de torsion (44b) s'étend approximativement jusqu'au plan médian longitudinal (40) vertical du véhicule et est formée par une barre pleine interne (44ba) et une barre creuse (44bb) radialement extérieure, qui sont connectées l'une à l'autre par entraînement à leurs extrémités opposées aux bras longitudinaux (44a), chaque dispositif de commande (46) étant disposé coaxialement aux barres de torsion (44b, 44c) dans la région des bras longitudinaux (44a) et entraînant les barres creuses (44bb), et les bras longitudinaux (44a) étant connectés aux barres pleines (44ba, 44c) de manière directe ou indirecte.

2. Agencement selon la revendication 1, **caractérisé en ce que** chaque dispositif de commande (46) est formé par un démultiplicateur (50) connecté par entraînement à une barre de torsion (44b) et par un moteur électrique (48).

3. Agencement selon les revendications 1 ou 2,
**caractérisé en ce que**, dans le cas d'une suspension de roue (10) pour véhicules automobiles ayant un châssis auxiliaire (20) pour l'articulation d'éléments de guidage de roue (14, 16, 18), les dispositifs de commande (46) sont positionnés à l'intérieur de supports longitudinaux (20a) du châssis auxiliaire (20).

4. Agencement selon les revendications 1, 2 ou 3, **caractérisé en ce que** les barres de torsion (44b) sont fabriquées symétriquement avec les bras longitudinaux (44a) de telle sorte qu'elles puissent être utilisées à gauche ou à droite en les retournant, en tant que pièces identiques.

5. Agencement selon l'une quelconque des revendications précédentes, **caractérisé en ce que** les barres de torsion (44b, 44c) sont montées dans la région de la transition aux bras longitudinaux (44a) de manière rotative sur la carrosserie du véhicule automobile, **en ce que** les barres de torsion s'étendant transversalement (44b, 44c) sont prolongées au-delà de ces points d'appui (48a) et sont connectées par entraînement à des arbres creux de retour (44e) disposés coaxialement, qui portent à leur tour les bras longitudinaux (44a).

6. Agencement selon la revendication 5, **caractérisé en ce que** les barres de torsion (44b, 44c) sont guidées librement à travers les points de palier (48a) et **en ce que** les arbres creux de retour (44e) sont montés à rotation directement dans les points de palier (48a).

7. Agencement selon l'une quelconque des revendications précédentes, **caractérisé en ce que** les dispositifs de commande (46) sont formées à chaque fois par un moteur électrique d'arbre creux (48) et un démultiplicateur (50) s'y raccordant axialement, et **en ce que** les barres pleines respectives (44ba, 44c) sont guidées à travers les dispositifs de commande (46) et sont connectées directement ou indirectement aux bras longitudinaux (44a).

8. Agencement selon l'une quelconque des revendications précédentes**, caractérisé en ce que** les points de palier prévus dans la région des bras longitudinaux (44a) pour les barres de torsion (44c, 44e) sont intégrés dans le boîtier (48a) fixé à la carrosserie du dispositif de commande (46).

9. Agencement selon l'une quelconque des revendications précédentes, **caractérisé en ce que** les barres pleines (44ba, 44c) guidées à travers les dispositifs de commande (46) sont prolongées au-delà des points de palier (48a) et sont connectées par entraînement à des arbres creux de retour (44e) disposés coaxialement, qui portent à leur tour les bras longitudinaux (44a) et qui sont guidés à rotation directement dans les points de palier (48a).

10. Agencement selon l'une quelconque des revendications précédentes, **caractérisé en ce que** les démultiplicateurs (50) des dispositifs de commande (46) sont formés par des réducteurs Harmonic Drive.
